# EUROPEAN PATENT APPLICATION

(11) **EP 2 210 735 A1**
(43) Date of publication of application: **28.07.2010**
(21) Application number: 10000621.2
(22) Date of filing: 22.01.2010
(51) Int. Cl.: B32B 3/24, B32B 27/06, B65D 33/01, B65D 33/04, B65D 65/16, B65D 85/34, B65D 85/36

(54) **Band for the manufacturing of bags and bag**

(30) Priority: 22.01.2009 ES 200900172; 20.01.2010 ES 201030068
(71) Applicant: Gaviplas, S.L., 46893 Alfarrasi Valencia (ES)
(72) Inventor: Garcia Vidal, Rafael, 46893 Alfarrasi Valencia (ES)
(74) Representative: Isern-Jara, Nuria

(57) **Abstract**

Band (1) for the manufacturing of bags, comprising an elongated strip of substantially rectangular outline cuttable, made of a first layer (2) of clear plastic film and a second layer (3) formed of at least a region with opaque optical properties which is overlain longitudinally along one face of the first layer (2) and a bag manufactured from the above described band, which improves the conservation of products maintained inside such bags.

## Description

### SUBJECT OF THE INVENTION

The object of the present invention relates to a band and a bag incorporating remarkable novelties and advantages.

More precisely, the invention refers to a band for the manufacturing of bags, and to a bag made from said band for the transport of products, especially horticultural products.

### BACKGROUND OF THE INVENTION

As has been well known for a number of years, certain horticultural products such as oranges, lemons, potatoes, and so on, are marketed in plastic bags with a mesh structure, allowing aeration and visual inspection of the product stored inside.

On certain occasions, in order to obtain these bags, one starts from a mesh-like body which closes from both ends after introducing the product inside, optionally providing handles to facilitate the manual transport for the consumer.

In another case, one starts from a continuous laminar band which closes on itself to configure a substantially tubular body through a longitudinally line of thermosoldering, after which the above said procedure is repeated so that transformation of the continuous band in a laminar body is done simultaneously to the filling and independently of the bags.

In all above cases it has been observed that this type of bags has the main disadvantage of letting light through all the band in such a way that light directly incides on the product stored inside. Consequently horticultural products can suffer a "greening" effect from the coloration of the underside of the skin of potatoes, as well as a loss of organoleptic properties.

Another, not less notable problem is that the mesh-like body is not able to receive printed information, which is essential on most occasions because it is usually needed to know the product trademark, origin, bar code for traceability, and so on.

### DESCRIPTION OF THE INVENTION

The present invention has been developed in order to provide a band and a bag made of said bag, which solves the above said disadvantages, also contributing other additional advantages which will become obvious from the description given below.

Therefore, a first objective of the invention is to provide a band for the manufacturing of bags, **characterized in that** it comprises a elongated strip of substantially rectangular outline cuttable with conventional cutting means, such as for example dies, cutters, and so on, made of a first layer of clear film and a second layer formed by at least one region with opaque optical properties, which can be white or black in colour, which is overlain longitudinally on one of the faces of the first layer.

According to another aspect of the band of the invention, the first layer has a surface with multiple bores which facilitate the aeration of the product to be contained when a bag is made of the described band.

Advantageously, the two layers are joined by means of a known type adhesive.

Therefore the present invention contemplates providing a band with a good mechanical strength, an optimal protection of the products contained inside upon light exposure, a greater surface or capacity for printing, a shorter production time during manufacturing by virtue of the greater ease for soldering the laminates.

It is another subject of the invention to also provide a bag for the packaging of products, **characterized in that** it includes a band of the above described type which is folded in upon itself and joined integrally through the longitudinal ends. In a preferred embodiment, the joining of ends is carried out by means of thermosoldering.

According to another aspect of the invention, said first layer of plastic film is formed by multiple independent portions which are joined to the second layer through a region near its lateral edges, so that the lateral edges of said multiple portions are overlain in the second layer.

Thanks to these features, as well as the advantages as regards avoiding or reducing the "greening" effect, considerable material savings are achieved from the layer of clear plastic film and consequently from the manufacturing cost of the bag obtained from the above described band.

Other features and advantages of the band and bag subject of the present invention will become obvious from the description of a preferred, though not limiting, embodiment, which is illustrated as a non-limiting example in the attached drawings, in which,

### BRIEF DESCRIPTION OF THE DRAWINGS

Figure 1.- Perspective view of a first embodiment of a band according to the present invention.
Figure 2.- Perspective view of a second embodiment of a band of the invention.
Figure 3.- Perspective view of a third embodiment of a band according to the invention.
Figure 4.- Front view of a bag according to the invention.
Figure 5.- Perspective view of a fourth embodiment of a band for bags according to the present invention; and
Figure 6.- View, enlarged for the sake of clarity, of a cross-section of the band represented in figure 5 along the line A-A.

### DESCRIPTION OF A PREFERRED EMBODIMENT

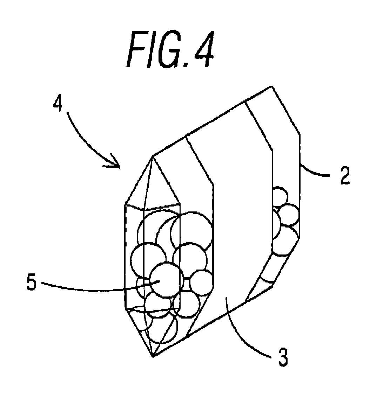

In the attached figures, a portion of a continuous band can be seen indicated generally as 1, for the manufacturing of bags such as that shown in figure 4 and described below, especially designed for the transport of horticultural products, comprising a elongated strip of substantially rectangular outline cuttable in a cross-sectional manner. Said band 1 is made of a first layer 2 of clear plastic film and a second layer 3 formed of at least a region with opaque optical properties which is overlain longitudinally on one of the faces of the first layer, which acts as a barrier for light coming from the outside, thus limiting exposure of the products stored inside a bag. The two layers 2 and 3 are joined together by using a commercially available adhesive and are thus not further described. For an appropriate aeration of the inside content, the first layer 2 of the band 1 has a plurality of bores made during the manufacturing process of said band 1.

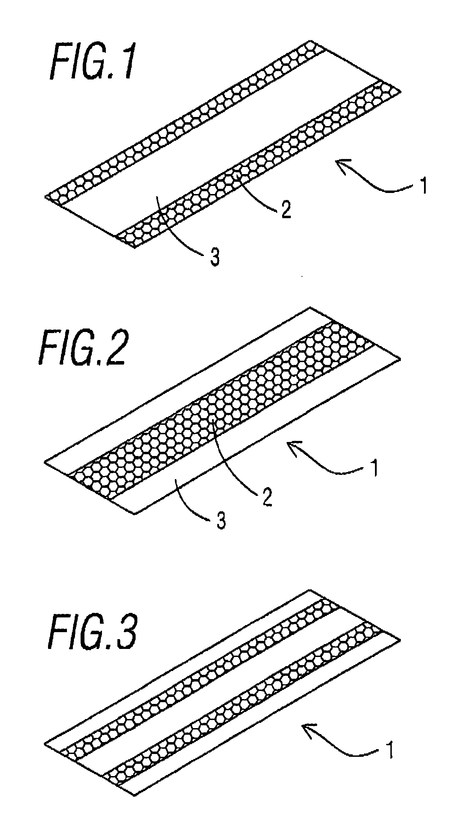

The difference existing between the different embodiments of bands shown lies essentially in the number of opaque regions, having provided a single opaque region on the band of figure 1, two on the band shown in figure 2 and finally three regions on that shown in figure 3. Like references designate like common elements in the different represented bands.

With special reference to the bag 4 represented in figure 4, this bag is obtained by folding the band 1 shown in figure 1 to form a substantially tubular body which is joined in its free lateral ends, as well as by its inferior base by using thermosoldering or other appropriate means to that end according to need.

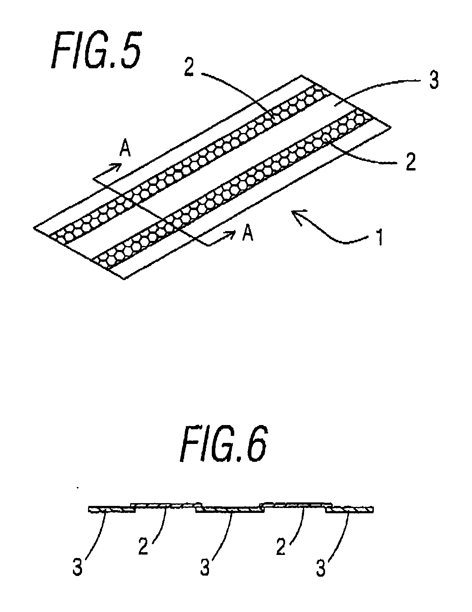

In a fourth embodiment of a continuous band shown in figures 5 and 6, indicated generally with the reference 1, designed for the manufacturing of bags for the transport of horticultural products, comprises an elongated strip of substantially rectangular outline cuttable in cross-section. In particular, said band 1 comprises an elongated strip of substantially rectangular outline cuttable, made of a first layer of clear plastic film 2 which lets light through (once the bag has been formed) and a second layer 3 formed by at least one region with opaque optical properties which is overlain longitudinally along a face of the first layer.

As can be seen more clearly in figure 6, said first layer of plastic film 2 is formed of multiple independent portions which are joined to the second layer 3 through a region near its lateral edge, so that the lateral edges of said multiple portions are overlain in the second layer, being said joining for example, by means of a commercially available adhesive of known type, and thus is not further described.

As in the above described embodiments, to obtain a bag from the above disclosed band, a fold of the band 1 shown in figures 1 and 3 is done, forming a substantially tubular body which is joined by its free lateral ends, as well as its bottom base, by means of thermosoldering or other appropriate means known by the skilled in the art.

The details, forms, dimensions and other accessory elements, as well as the materials used for the manufacturing of the band and the bag of the invention can be conveniently replaced by other technically equivalent elements without departing from the essentiality of the invention nor from the scope defined in the appended claims below.

## Claims

1. Band (1) for the manufacturing of bags, **characterized in that** it comprises an elongated strip of substantially rectangular outline cuttable, made of a first layer (2) of clear plastic film and a second layer (3) made of at least a region with opaque optical properties which is overlain longitudinally along one face of the first layer (2).

2. Band (1) according to claim 1, **characterized in that** the first layer (2) has a surface with multiple bores.

3. Band (1) according to claim 1, **characterized in that** the two layers (2, 3) are joined together with adhesive.

4. Band (1) according to claim 1, **characterized in that** the second layer comprises two regions with opaque optical properties.

5. Band (1) according to 1, **characterized in that** said first layer of plastic film is formed by multiple independent portions which are joined to the second layer through a region near its lateral edges, so that the lateral edges of said multiple portions are overlain in the second layer.

6. Bag (4) for the packaging of products, **characterized in that** it comprises a band (1) according to any claims 1 to 4 which is folded in upon itself and joined integrally through the longitudinal ends.

7. Bag (4) according to claim 6, **characterized in that** the joining of the longitudinal ends of the bag is carried out by thermosoldering.
